# EUROPÄISCHE PATENTSCHRIFT

(11) **EP 0 883 734 B1**
(45) Veröffentlichungstag und Bekanntmachung des Hinweises auf die Patenterteilung: **29.05.2002**
(21) Anmeldenummer: 97915295.6
(22) Anmeldetag: 19.02.1997
(51) Int. Cl.: F01D 5/02, F01D 5/28

(54) **TURBINENWELLE AUS ZWEI LEGIERUNGEN**
TURBINE SHAFT CONSISTING OF TWO ALLOYS
ARBRE DE TURBINE CONSTITUE DE DEUX ALLIAGES

(30) Priorität: 29.02.1996 DE 19607736; 15.07.1996 DE 19628506
(43) Veröffentlichungstag der Anmeldung: 16.12.1998
(73) Patentinhaber: SIEMENS AKTIENGESELLSCHAFT, 80333 München (DE)
(72) Erfinder: KERN, Torsten-Ulf, D-46483 Wesel (DE); EWALD, Jürgen, D-45481 Mülheim (DE)
(86) Internationale Anmeldenummer: DE9700307
(87) Internationale Veröffentlichungsnummer: WO9732112

(56) Entgegenhaltungen:
- EP-A- 0 639 691
- GB-A- 616 432
- GB-A- 2 239 826
- US-A- 4 587 700
- US-A- 4 659 288
- US-A- 4 787 821
- US-A- 5 100 050
- US-A- 5 161 950

## Beschreibung

Die Erfindung betrifft eine Turbinenwelle, insbesondere für eine Dampfturbine, welche entlang einer Rotationsachse gerichtet ist und einen ersten axial gerichteten Bereich mit einem maximalen Radius R₁ und einen an diesen angrenzenden zweiten axial gerichteten Bereich mit einem maximalen Radius R₂ aufweist.

In der US-PS 3,767,390 ist ein martensitischer Edelstahl für Anwendungen bei hohen Temperaturen, beispielsweise zur Herstellung von Dampfturbinenschaufeln oder Bolzen zur Verbindung zweier Hälften eines Dampfturbinengehäuses, beschrieben. Dieser Stahl hat vorzugsweise einen Anteil (alle nachfolgenden Angaben in Gewichtsprozent) von 12 % Chrom und etwa 0.3 % Niob. Durch die Zugabe des Niobs soll eine Erhöhung der Zeitstandfestigkeit sowie eine weitgehende Freiheit des Stahl von δ-Ferrit erreicht werden. Als weitere Legierungsbestandteile weist der beschriebene Stahl in einer bevorzugten Ausführungsform 0.25 % Co, 4 % Mn, 0.35 % Si, 0.75 % Ni, 1.0 % Mo, 1.0 % W, 0.3 % V, 0.75 % N sowie einen Rest an Eisen und Verunreinigungen von Schwefel, Phosphor und Stickstoff auf.

In dem Artikel "Development and Production of High Purity 9Cr1MoV Steel for High Pressure - Low Pressure Rotor Shaft" von T. Azuma, Y. Tanaka, T. Ishiguro, H. Yoshita und Y. Iketa in Conference Proceedings of Third International Turbine Conference, 25 - 27. April 1995, Civic Centre, Newcastle upon Tyne, GB, "Materials Engineering in Turbines and Compressors", Herausgeber A. Strang, Seiten 201 bis 210, ist ein Stahl für eine kombinierte Hochdruck- und Niederdruck-Dampfturbinenwelle angegeben. Der Stahl soll für die Herstellung einer solchen Turbinenwelle aus einem einzigen Material geeignet sein. Er hat in einer bevorzugten Ausführungsform eine Zusammensetzung von 9.8 % Chrom, 1.3 % Nickel, 0.16 % Kohlenstoff, weniger als 0.1 % Silizium, weniger als 0.1 % Mangan, 1.4 % Molybdän, 0.21 % Vanadium, 0.05 % Niob, 0.04 % Stickstoff, Rest Eisen sowie Verunreinigungen an Phosphor, Schwefel, Aluminium, Arsen, Zinn, Antimon. Der Hochdruckteil der Turbinenwelle hat einen Durchmesser von 1200 mm und der Niederdruckteil einen Durchmesser von 1750 mm, wobei die Turbinenwelle als Ganzes aus einem Rohling mit einem Durchmesser von 1800 mm gefertigt ist.

Aufgabe der Erfindung ist es, eine Turbinenwelle, insbesondere für eine Dampfturbine, anzugeben, die für einen Einsatz bei hohen thermischen Belastungen mit einem in axialer Richtung abnehmenden Temperaturverlauf und mit einer maximalen Temperatur von über 550 °C geeignet ist. Eine weitere Aufgabe der Erfindung besteht darin, ein Verfahren zur Herstellung einer solchen Turbinenwelle anzugeben.

Erfindungsgemäß wird die auf eine Turbinenwelle bezogene Aufgabe durch eine entlang einer Rotationsachse gerichtete Turbinenwelle gelöst, die einen ersten axial gerichteten Bereich mit einem maximalen Radius R₁ und einen an diesem angrenzenden zweiten axial gerichteten Bereich mit einem maximalen Radius R₂ > R₁ aufweist, wobei der erste Bereich einen ersten Grundwerkstoff und der zweite Bereich einen zweiten Grundwerkstoff mit einer jeweiligen Stahllegierung beinhalten 8.0 % bis 12.0 % Chrom (Angaben in Gewichtsprozent) aufweisen, deren Austenitisierungstemperatur im wesentlichen gleich sind. Der erste Grundwerkstoff eignet sich für den Einsatz bei einer hohen Temperatur, insbesondere von über 550 °C; der zweite Grundwerkstoff für einen Einstz bei einer niedrigeren Temperatur, insbesondere zwischen 350 °C und 550 °C.

Der erste Grundwerkstoff hat einen in Gewichtsprozent niedrigeren Anteil an Nickel als der zweite Grundwerkstoff, insbesondere einen um mehr als 0,1 % niedrigeren Nickel-Anteil. Der Anteil in Gewichtsprozent an Nickel beträgt für jeden Grundwerkstoff zwischen 0,1 % und 1,8 %, vorzugsweise für den zweiten Grundwerkstoff 1,0 % bis 1,5 % Nickel, insbesondere 1,3 %, und den ersten Grundwerkstoff 0,2 % bis 0,6 % Nickel. Der Chromgehalt des ersten Grundwerkstoffs, insbesondere für einen Hochdruck- Teil einer Dampfturbine, beträgt (Angaben in Gewichtsprozent) 10 % bis 12 % und der Chromanteil des zweiten Grundwerkstoffs, insbesondere für einen Niederdruck- Teil einer Dampfturbine, beträgt (Angaben in Gewichtsprozent) 9,5 % bis 10,5 %, insbesondere 9,8 %.

Bei einer Turbinenwelle mit bereichsweise unterschiedlichen Stahllegierungen gleicher Austenitisierungstemperatur, die in dem ersten Bereich mit geringeren Querschnitt einen Grundwerkstoff mit einem gegebenenfalls höheren Anteil an Chrom und einem niedrigeren Anteil an Nickel als in dem zweiten Bereich mit größerem Querschnitt hat, wird in dem ersten Bereich eine hohe Warmfestigkeit, eine hohe Zeitstandfestigkeit und in eine ausreichende Bruchzähigkeit erreicht. In dem zweiten Bereich werden hohe Streckgrenzanforderungen und eine sehr gute Kerbschlagzähigkeit und Bruchzähigkeit gewährleistet. Eine geforderte Streckgrenze Rₚ₀₂ kann bei ca. 720 MPa liegen. Die Bruchzähigkeit liegt beispielsweise bei ca. 200 MPa und für die Zähigkeit gilt, daß die FATT kleiner als 25 °C ist. Durch die hohe Warmfestigkeit des ersten Bereiches eignet sich dieser als Hochdruckteil einer kombinierten Hochdruck-Niederdruck-Dampfturbine selbst bei Dampfeintrittstemperaturen von über 550 °C bis etwa 650 °C. Der zweite Bereich eignet sich bevorzugt für den Einsatz bei Temperaturbelastungen von 350 °C bis etwa 550 °C. Durch eine unterschiedliche Wahl des Chrom- und Nickelanteils in dem ersten Bereich und dem zweiten Bereich ist entsprechend den Materialanforderungen eine selektive Einstellung der Warmfestigkeit in dem ersten Bereich und der Zähigkeit in dem zweiten Bereich weitgehend unabhängig voneinander gegeben. Im Gegensatz zu einer Turbinenwelle, die aus einem einheitlichen Werkstoff hergestellt ist, bedarf es hierbei keines Kompromisses zwischen Zeitstandfestigkeit in dem thermisch höher belasteten Bereich und Zähigkeit in dem thermisch etwas weniger hoch belasteten zweiten Bereich. Auch ergibt sich durch ähnlich zusammengesetzte Grundwerkstoffe nicht das Problem, daß in einer Übergangszone zwischen dem ersten Bereich und dem zweiten Bereich eine Vermischung der Grundwerkstoffe mit deutlich abweichenden Materialeigenschaften entsteht. Entlang der Rotationsachse hat die Turbinenwelle in Bereichen mit unterschiedlichem Radius unterschiedliche thermomechanische Eigenschaften. Diese Eigenschaften werden durch die gezielt gewählten unterschiedlichen chemischen Zusammensetzungen erzielt. Die Bereiche können hierbei durch Abschmelzen unterschiedlich legierter Elektroden nach dem Elektro-Schlacke-Umschmelz-Verfahren (ESU-Verfahren) hergestellt werden.

Durch die im wesentlichen gleiche Austenisitierungstemperatur ändern sich in der Übergangszone zwischen dem ersten Bereich und dem zweiten Bereich die Materialeigenschaften allenfalls geringfügig. Sie sind somit weitgehend unabhängig von der jeweiligen chemischen Zusammensetzung. Durch eine ähnliche Zusammensetzung der Hauptkarbid- und Hauptnitrid-Bildner, wie C, N, V, Nb, Mo, W in den Grundwerkstoffen ergibt sich für die gesamte Turbinenwelle die im wesentlichen einheitliche Austenitisierungstemperatur. Hierdurch wird erreicht, daß im Gegensatz zu Turbinenwellen mit deutlich unterschiedlichen Grundwerkstoffen, der erste Bereich mit der gleichen Temperatur wie der zweite Bereich austenitisiert werden kann. Eine unterschiedliche Temperaturbehandlung, insbesondere bei einem Hochdruck- und Niederdruckteil einer Dampfturbinenwelle, ergäbe eine negative Beeinflussung der jeweiligen Austenitisierungsvorgänge.

Nunmehr kann in einem Arbeitschritt ein weitgehend ferritfreies Gefüge der gesamten Turbinenwelle erzeugt werden. Die nachfolgenden Stabilisierungs- und Anlaßtemperaturen unterscheiden sich nur geringfügig voneinander. Die Handhabung unterschiedlicher Anlaßtemperaturen für verschiedene Bereiche in axialer Richtung der Turbinenwelle bereiten außerdem keine technischen Probleme. Die Austenitsierungstemperatur liegt vorzugsweise im Bereich von 950 °C bis 1150 °C, insbesondere bei etwa 1050 °C.

Der erste Grundwerkstoff weist vorzugsweise (Angaben in Gewichtsprozent), 0 bis 3 % Wolfram, 0 bis 3 % Kobalt und/oder 0 bis 2 % Rhenium auf. Insbesondere liegt der Anteil an Wolfram zwischen 2,4 % und 2,7 % und/oder der Anteil an Kobalt zwischen 2,4 % und 2,6 %. Durch Zugabe von Rhenium ist eine Erhöhung sowie der Zeitstandfestigkeit erreichbar.

Als weitere Legierungskomponenten weist der erste Grundwerkstoff auf (Angaben in Gewichtsprozent):
0 % bis 0.5 % Mo, insbesondere 0.15 % bis 0.25 %,
0.1 % bis 0.3 % V, insbesondere 0.15 % bis 0.25 %,
0.02 % bis 0.18 % Nb, insbesondere 0.04 % bis 0.08 %,
0.05 % bis 0.25 % C, insbesondere 0.08 % bis 0.12 %,
0.01 % bis 0.07 % N, insbesondere 0.15 % bis 0.045 %
und Desoxidationselemente wie < 0.15 % Si, < 0.7 % Mn, insbesondere 0.4 % bis 0.6 %,
und Rest Eisen sowie gegebenenfalls herstellungsbedingte Verunreinigungen, insbesondere an Phosphor, Antimon, Zinn, Aluminium, Arsen, Schwefel.

Der erste Grundwerkstoff kann eine hochreine Stahllegierung (superclean, ultrasuperclean) mit sehr geringem Verunreinigungsgehalt sein. Solche Stahllegierungen, insbesondere für 12 % - Chromstähle, sind beispielsweise in dem Tagungsbericht "Clean Steel, Super Clean Steel" 06. bis 07.03.1995, Copthorne Tara Hotel, London, Großbritannien in den Artikeln "The EPRI Survey on Superclean Steels" von J. Nutting, insbesondere in Tabelle 1, sowie "Development of Production Technology and Manufacturing Experiences with Super Clean 3,5 NiCrMoV Steels" von W. Meyer, R. Bauer, G. Zeiler insbesondere in den Tabellen zu dem 12 % - Chromstahl (Böt550SO) beschrieben.
Zumindest der erste Grundwerkstoff, d.h. der Grundwerkstoff für den Bereich mit kleinerem Radius und hoher Warmfestigkeit, weist als weitere Legierungskomponente Bor bis 0.03 Gew. %, insbesondere 0.005 Gew. % bis 0.02 Gew. % auf.

Als weitere Legierungselemente weist der zweite Grundwerkstoff vorzugsweise
1.0 % bis 1.6 % Mo, insbesondere 1.4 %,
0.15 % bis 0.25 % V, insbesondere 0.21 %,
0.03 % bis 0.07 % Nb, insbesondere 0.05 %,
0.03 % bis 0.06 % N, insbesondere 0.04 %,
bis 0.1 % Si,
0.1 bis 0.2 % C, insbesondere 0.16 %,
bis 0.2 % Mn auf.

Vorzugsweise eignet sich die Turbinenwelle für die Verwendung in einer Dampfturbine, wobei der erste Bereich der Aufnahme der Laufschaufeln des Hochdruckteils der Dampfturbine und der zweite Bereich der Aufnahme der Laufschaufeln des Niederdruckteils der Dampfturbine dient. Während eines Betriebes der Dampfturbine kann dabei der Hochdruckteil einer Dampftemperatur von 550 °C bis 650 °C ausgesetzt sein, was eine gute Warmfestigkeit des ersten Bereichs, vor allem im oberflächennahen Bereich, erfordert. In der Umgebung der Rotationsachse herrschen niedrigere Temperaturen als an der Oberfläche, so daß gegebenenfalls auch im Hochdruckteil ein achsnaher Kernbereich aus einem Grundwerkstoff mit niedrigerer Warmfestigkeit, beispielsweise dem zweiten Grundwerkstoff, gebildet sein kann. Der zweite Bereich, welcher den Niederdruckteil der Dampfturbine bildet und einen größeren Radius als der erste Bereich aufweist, ist insbesondere aufgrund der größeren Niederdruck-Laufschaufeln sowie des eignen größeren Radiuses höheren mechanischen Belastungen als der Hochdruckteil ausgesetzt. Eine hohe Zähigkeit, insbesondere Bruchzähigkeit, ist daher für den Niederdruckteil erforderlich, was durch die entsprechende Wahl der Legierungskomponenten (höherer Anteil an Nickel, gegebenenfalls geringerer Anteil an Chrom) des zweiten Grundwerkstoffes erreicht wird. Die thermische Belastung des Niederdruckteils liegt dabei vorzugsweise unterhalb von 500 °C, insbesondere unterhalb von 480 °C. Die Streckgrenze kann bei über 720 MPa liegen.

Im Hinblick auf die bei einer Oberflächentemperaturbelastung radial in Richtung der Rotationsachse abnehmenden Temperatur in der Turbinenwelle weist der erste Bereich vorzugsweise einen achsnahen Kernbereich auf, der von einem Mantelbereich umgeben ist. Der Mantelbereich besteht vorzugsweise aus dem ersten Grundwerkstoff und besitzt somit die geforderte Warmfestigkeit. Der Kernbereich besteht vorzugsweise aus dem zweiten Grundwerkstoff oder einem dritten Grundwerkstoff, welcher auch über eine gute Warmfestigkeit verfügt. Der Kernbereich kann hierbei durch Elektro-Schlacke-Umschmelzen einer entsprechend legierten Elektrode oder Elektroden hergestellt sein.

Der maximale Radius R₁ des ersten Bereiches, des Hochdruckteils, liegt vorzugsweise zwischen 350 mm und etwa 750 mm. Der maximale Radius R₂ des zweiten Bereiches, d.h. des Niederdruckteils, liegt vorzugsweise zwischen 700 mm und 1000 mm.

Die auf ein Verfahren zur Herstellung einer Turbinenwelle gerichtete Aufgabe wird dadurch gelöst, daß der erste Bereich durch Abschmelzen einer Elektrode oder mehrerer Elektroden aus dem ersten Grundwerkstoff, beispielsweise nach einem ESU-Verfahren hergestellt wird. Der zweite Bereich wird durch ein Abschmelzen einer Elektrode oder mehrerer Elektroden aus dem zweiten Grundwerkstoff hergestellt. Die Herstellung der gesamten Welle kann in einem einzigen Arbeitsgang erfolgen, wobei zuerst Elektroden aus dem ersten Grundwerkstoff und anschließend Elektroden aus dem zweiten Grundwerkstoff oder umgekehrt abgeschmolzen werden. Ein so hergestellter Rohling einer Turbinenwelle kann beispielsweise durch Schmieden auf die entsprechenden Radien des ersten Bereiches und des zweiten Bereiches gebracht werden. Die Wärmebehandlung einer durch das ESU-Verfahren hergestellten kombinierten Turbinenwelle kann für den ersten Bereich und den zweiten Bereich gleichartig erfolgen. Eine Vorabwärmebehandlung wird bei etwa 1100 °C über eine Zeitdauer von etwa 26 Stunden durchgeführt und mit einer Ofenabkühlung auf etwa 680 °C weitergeführt. Daran schließt sich, je nach Wellendurchmesser, eine Qualitätswärmebehandlung mit der Austenitisierungstemperatur von etwa 1070 °C über eine Zeitdauer von etwa 33 Stunden an. Ein Anlassen erfolgt danach beispielsweise über eine Zeitdauer von etwa 24 Stunden bei einer Temperatur zwischen 650 °C und 680 °C, wobei bereichsweise unterschiedliche Anlaßtemperaturen erzeugt werden können.

Eine Herstellung eines ersten Bereiches mit einem um die Rotationsachse sich erstreckenden Kernbereich aus dem zweiten Grundwerkstoff wird erfindungsgemäß dadurch erzielt, daß ein aus dem ersten Grundwerkstoff gebildeter Hohlzylinder durch ein Abschmelzen einer oder mehrerer Elektroden mit dem zweiten Grundwerkstoff aufgefüllt wird. Der Hohlzylinder aus dem ersten Grundwerkstoff kann durch konventionelle Schmiedeverfahren hergestellt sein. Beim Auffüllen des Hohlzylinders mit dem zweiten Grundwerkstoff oder einem dritten Grundwerkstoff mit hoher Warmfestigkeit, beispielsweise mittels des Elektro-Schlacke-Umschmelzverfahrens (ESU-Verfahrens), kann die so hergestellte Rohform des ersten Bereiches mit dem erstarrenden ESU-Schmelzbad verschweißt werden. Es ist ebenfalls möglich, den ersten Bereich auf den zweiten Bereich aufwachsen zu lassen. Analog kann der zweite Bereich, der Niederdruck-Teil, durch Füllen eines aus dem zweiten Grundwerkstoff bestehenden Hohlzylinders durch den ersten Grundwerkstoff oder einen weiteren Grundwerkstoff erfolgen.

Anhand der in der Zeichnung dargestellten Ausführungsbeispiele werden die Turbinenwelle und das Verfahren zur Herstellung der Turbinenwelle näher erläutert. Es zeigen schematisch und nicht maßstäblich
- FIG 1: eine entlang einer Rotationsachse gerichtete Dampfturbinenwelle und
- FIG 2 und FIG 3: einen Rohling für eine Dampfturbinenwelle.

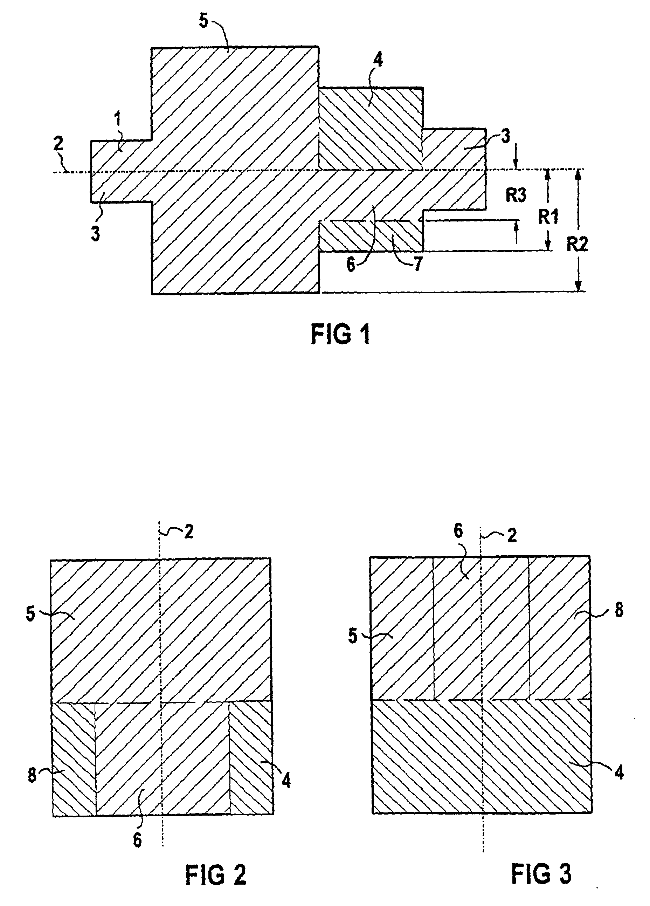

FIG 1 zeigt zwei unterschiedliche Ausführungsformen einer entlang einer Rotationsachse 2 gerichteten Turbinenwelle 1. Die Turbinenwelle 1 hat eine ersten zur Rotationsachse rotationssymmetrischen Bereich 4, der den Hochdruck-Teil darstellt, mit einem Radius R₁. An den ersten Bereich 4 schließt sich ein zweiter Bereich 5, der Niederdruck-Teil, an, welcher gegenüber dem ersten Bereich 4 einen größeren Radius R₂ aufweist. Die sich jeweils an den ersten Bereich 4 bzw. den zweiten Bereich 5 anschließenden Enden 3 der Turbinenwelle 1 dienen der Lagerung. In der ersten oberhalb der Rotationsachse 2 dargestellten Ausführungsform ist der erste Bereich 4 vollständig aus einem ersten Grundwerkstoff gefertigt, welcher eine hohe Warmfestigkeit besitzt, so daß die Turbinenwelle 1 für einen Einsatz bei Dampfeintrittstemperaturen von etwa 550 °C bis etwa 650 °C geeignet ist. Der erste Grundwerkstoff hat einen Gehalt an Chrom von etwa 10.5 Gewichtsprozent und einen Gehalt an Nickel von etwa 0.75 Gewichtsprozent. Er kann neben weiteren Legierungsbestandteilen Wolfram bis zu 3,0 Gew. %, Rhenium bis zu 2,0 Gew. % und eine Beimischung von 0.005 Gew. % bis 0.02 Gew. % Bor aufweisen. Der zweite Bereich 5 ist aus einem zweiten Grundwerkstoff gefertigt, welcher dem ersten Grundwerkstoff in seiner chemischen Zusammensetzung ähnelt. Der Gehalt an Chrom beträgt etwa 9.8 Gewichtsprozent und der Gehalt an Nickel etwa 1.3 Gewichtsprozent. Beide Grundwerkstoffe weisen im wesentlichen dieselbe Austenitisierungstemperatur auf.

Bei der zweiten unterhalb der Rotationsachse 2 dargestellten Ausführungsform der Turbinenwelle 1 weist der erste Bereich 4 einen axialen Kernbereich 6 mit einem Radius R₃, welcher kleiner als der Radius R₁ ist, auf. Dieser Kernbereich 6 ist gebildet aus dem zweiten Grundwerkstoff. Der Kernbereich 6 ist von einem Mantelbereich 7, bestehend aus dem ersten Grundwerkstoff, ummantelt. Hierdurch hat die Turbinenwelle 1 in dem oberflächennahen Bereich des ersten Bereiches 4, der den hohen Dampftemperaturen ausgesetzt ist, die gewünschte Warmfestigkeit. In dem achsnahen Bereich, d.h. dem Kernbereich 6, liegen geringere Temperaturen vor, so daß die Warmfestigkeit des zweiten Grundwerkstoffes ausreichend ist und somit der Kernbereich 6 zudem die hohe Bruchzähigkeit des zweiten Grundwerkstoffes aufweist.

In FIG 2 ist eine entlang einer Rotationsachse 2 gerichtete Rohform einer Turbinenwelle 1 dargestellt. Die Rohform weist einen ersten Bereich 4 auf, auf den entlang der Hauptachse 2 ein zweiter Bereich 5 aufgebracht ist. Der erste Bereich 4 weist einen Hohlzylinder 8 aus dem ersten, dem warmfesten, Grundwerkstoff auf. In das Innere, den Kernbereich 6, des Hohlzylinders 8 werden nichtdargestellte Elektroden aus dem zweiten Grundwerkstoff gemäß dem ESU-Verfahren abgeschmolzen, so daß sich sukzessive der Kernbereiche 6 mit dem zweiten Grundwerkstoff füllt. Der zweite Grundwerkstoff bildet so in dem ersten Bereich 4 einen achsnahen Kernbereich 6. Der Mantelbereich 8 ist vorzugsweise als rotationssymmetrischer Hohlzylinder auf konventionelle Art und Weise hergestellt, insbesondere geschmiedet. Der zweite Bereich 5 wird durch Aufwachsen des zweiten Grundwerkstoffes nach dem ESU-Verfahren auf den ersten Bereich 4 und den Kernbereich 6 gebildet. Aus der in FIG 2 dargestellten Rohform kann durch Schmieden eine Turbinenwelle 1 gemäß FIG 1 (zweite Ausführungsform) hergestellt werden. Die Enden 3 können nachträglich angeschweißt werden.

Es ist auch möglich, daß der Bereich 4 und der Kernbereich 6 aus dem zweiten Grundwerkstoff, d.h. dem Werkstoff für den Niederdruckteil der Dampfturbine, und der Bereich 5 aus dem ersten Grundwerkstoff, d.h. dem warmfesten Werkstoff des Hochdruckteils, hergestellt wird. Hierdurch wird der Niederdruckteil der Dampfturbinenwelle in zwei Arbeitsschritten hergestellt, wobei beispielsweise durch konventionelle Schmiedetechnik ein ringförmiger Mantelbereich 8 hergestellt wird. In diesen Mantelbereich wird aus demselben Werkstoff, nämlich dem zweiten Grundwerkstoff, durch das ESU-Verfahren der Kernbereich 6 aufgefüllt. Hierdurch ist es möglich, selbst in ESU-Anlagen in denen der gesamte Niederdruckteil, d.h. der Bereich 5, nicht herstellbar wäre, durch Auffüllen des Kernbereiches 6 in den geschmiedeten Mantelbereich 8 hinein ausreichend große zu verschmiedende Blöcke herzustellen. Eine entsprechende Rohform für eine Turbinenwelle 1 mit einem aus einem Mantelbereich 8 und einem Kernbereich 6 bestehenden zweiten Bereich 5 ist in FIG 3 dargestellt.

Die Erfindung zeichnet sich durch eine kombinierte Hochdruck-Niederdruck-Turbinenwelle für eine Dampfturbine aus, bei der der Hochdruckteil mit kleinerem Durchmesser und der Niederdruckteil mit größerem Durchmesser aus einer jeweils ähnlichen Stahllegierung hergestellt werden. Die Stahllegierungen weisen dabei 8.0 bis 12.5 Gewichtsprozent Chrom und gegebenenfalls 0.1 bis 1.8 Gewichtsprozent Nickel auf. Der Nikkelanteil des Hochdruckteils ist niedriger als der entsprechende Anteil des Niederdruckteils. Durch die Wahl ähnlicher Stahllegierungen mit vorzugsweise im wesentlichen denselben Karbid- und Nibridbildnern kann für die Turbinenwelle als Ganzes eine einheitliche Austenitisierungstemperatur von etwa 1050 °C angewandt werden. Die Stahllegierung des Hochdruckteils kann Kobald bis zu 3 Gew. % und/oder Re bis zu 2 Gew. % aufweisen. Weiterhin kann der Hochdruckteil einen achsnahen Kernbereich aus derselben Legierung, wie der Niederdruckteil aufweisen, wobei dieser Kernbereich von einem Mantelbereich umgeben ist, der aus der besonders warmfesten Stahllegierung des Hochdruckteils gefertigt ist. Durch die Wahl unterschiedlicher Stahllegierungen im oberflächennahen Bereich der Turbinenwelle kann den besonderen thermischen und mechanischen Belastungen im Niederdruckteil und Hochdruckteil getrennt Rechnung getragen werden. Der Hochdruckteil ist so ausgeführt, daß er eine hohe Warmfestigkeit für Dampftemperaturen von 550 °C bis 650 °C aufweist und der Niederdruckteil ist besonders für hohe Anforderungen an die Streckgrenze ausgebildet.

Ein Rohblock für die Turbinenwelle kann zu 100 % im ESU-Verfahren durch Abschmelzen mehrerer Elektroden unterschiedlicher chemischer Zusammensetzung oder durch Abschmelzen derartiger Elektronen in einen vorgefertigten Ringkörper aus einer der erwähnten Legierungskombinationen (erster Grundwerkstoff, zweiter Grundwerkstoff) hergestellt werden.

## Patentansprüche

1. Turbinenwelle (1), insbesondere für eine Dampfturbine, welche entlang einer Rotationsachse (2) gerichtet ist und einen ersten axialgerichteten Bereich (4) mit einem maximalen Radius R₁ und einen an diesen angrenzenden zweiten axialgerichteten Bereich (5) mit einem maximalen Radius R₂ > R₁ aufweist, wobei der erste Bereich (4) einen ersten Grundwerkstoff für einen Einsatz bei einer ersten Temperatur und der zweite Bereich (5) einen zweiten Grundwerkstoff für einen Einsatz bei einer zweiten gegenüber der ersten Temperatur niedrigeren Temperatur mit einer jeweiligen Stahllegierung beinhaltend 8.0 Gew.% bis 12.5 Gew.% Cr aufweist, deren jeweilige Austenitisierungstemperatur im wesentlichen gleich sind.

2. Turbinenwelle (1) nach Anspruch 1, wobei jede Austenitisierungstemperatur im Bereich von 950 °C bis 1150 °C, insbesondere bei 1050 °C, liegt.

3. Turbinenwelle (1), nach einem der vorhergehenden Ansprüche, bei der der erste Grundwerkstoff und der zweite Grundwerkstoff jeweils einen Anteil Nickel von 0.1 Gew.% bis 1.8 Gew.% aufweisen, wobei der zweite Grundwerkstoff einen größeren, insbesondere um mehr als 0,1 % größeren, Anteil an Nickel hat.

4. Turbinenwelle (1) nach einem der vorhergehenden Ansprüche, bei der der zweite Grundwerkstoff (Angaben in Gewichtsprozent) 9.5 % bis 10.5 % Cr und 1.0 % bis 1.5 % Ni, insbesondere 9.8 % Cr und 1.3 % Ni, und der erste Grundwerkstoff 10.0 % bis 12.0 % Cr und 0.2 % bis 0.6 % Ni aufweisen.

5. Turbinenwelle (1), nach einem der vorhergehenden Ansprüche, bei der der erste Grundwerkstoff aufweist (Angaben in Gewichtsprozent):
0 % - 3,0 % w, 0% - 3,0% Co und/oder 0'% - 2,0 % Re.

6. Turbinenwelle (1) nach Anspruch 5, bei der der erste Grundwerkstoff aufweist (Angaben in Gewichtsprozent):
2,4 % - 2,7 % W und/oder 2,4 % - 2,6 % Co.

7. Turbinenwelle (1) nach Anspruch 5 oder 6, bei der der erste Grundwerkstoff aufweist (Angaben in Gewichtsprozent):
Mo 0 % bis 0.5 %, insbesondere 0.15 % - 0.25 %,
V 0.1 % bis 0.3 %, insbesondere 0.15 % - 0.25 %,
Nb 0.02 % bis 0.18 %, insbesondere 0.04 % - 0.08 %,
N 0.01 % bis 0.07 %, insbesondere 0.015 % - 0.045 %
C 0.05 % bis 0.25 %, insbesondere 0.08 % - 0.12 % und
Desoxidationselemente, wie bis 0.15 % Si, bis 0.7 % Mn, insbesondere 0.4 % - 0.6 %, sowie herstellungsbedingte Verunreinigungen, insbesondere an As, Al, P, Sb, Sn, S.

8. Turbinenwelle (1) nach einem der Ansprüche 5 bis 7, bei der zumindest der erste Grundwerkstoff als weitere Legierungskomponente bis 0.03 Gew.%, insbesondere 0.005 Gew.% bis 0.02 Gew.%, Bor aufweist.

9. Turbinenwelle (1) nach einem der vorhergehenden Ansprüche, bei der der zweite Grundwerkstoff (Angaben in Gewichtsprozent) aufweist:
1.0 % bis 1.6 % Mo, insbesondere 1.4 %,
0.15 % bis 0.25 % V, insbesondere 0.21 %,
0.03 % bis 0.07 % Nb, insbesondere 0.05 %,
0.03 % bis 0.06 % N, insbesondere 0.04 %,
bis 0.1 % Si,
0.1 % bis 0.2 % C, insbesondere 0.16 %,
bis 0.2 % Mn.

10. Turbinenwelle (1), nach einem der vorhergehenden Ansprüche, bei der der erste Bereich (4) einen Kernbereich (6) aus dem zweiten Grundwerkstoff aufweist, welcher Kernbereich (6) von einem Mantelbereich (7) aus dem ersten Grundwerkstoff ummantelt ist.

11. Turbinenwelle (1) nach einem der vorhergehenden Ansprüche in einer Dampfturbine, bei der der erste Bereich (4) der Aufnahme der Lauf schaufeln des Hochdruckteils und der zweite Bereich (5) der Aufnahme der Lauf schaufeln des Niederdruckteils der Dampfturbine dient.

12. Verfahren zur Herstellung einer Turbinenwelle (1) nach einem der vorhergehenden Ansprüche, bei dem durch Abschmelzen einer Elektrode oder mehrerer Elektroden aus dem ersten Grundwerkstoff der erste Bereich (4) und durch Abschmelzen einer Elektrode oder mehrerer Elektroden aus dem zweiten Grundwerkstoff der zweite Bereich (4) so hergestellt werden, daß sie miteinander verbunden sind.

13. Verfahren zur Herstellung einer Turbinenwelle (1) nach einem der Ansprüche 1 bis 11 oder Verfahren nach Anspruch 12, bei dem der erste Bereich (4) derart hergestellt wird, daß aus dem ersten Grundwerkstoff ein einen Mantelbereich (7) bildender Hohlzylinder (8) gebildet wird, welcher Hohlzylinder (8) durch Abschmelzen einer Elektrode oder mehrerer Elektroden mit dem zweiten oder einem dritten Grundwerkstoff einen Kernbereich (6) bildend gefüllt wird.

14. Verfahren zur Herstellung einer Turbinenwelle (1) nach einem der Ansprüche 1 bis 11 oder Verfahren nach Anspruch 12, bei dem der zweite Bereich (5) derart hergestellt wird, daß aus dem zweiten Grundwerkstoff ein einen Mantelbereich (7) bildender Hohlzylinder (8) gebildet wird, welcher Hohlzylinder (6) durch Abschmelzen einer Elektrode oder mehrerer Elektroden mit dem ersten Grundwerkstoff einen Kernbereich (6) bildend gefüllt wird.

## Claims

1. Turbine shaft (1), in particular for a steam turbine, which is oriented along an axis of rotation (2) and has a first axially oriented area (4) with a maximum radius R₁ and a second axially oriented area (5) which adjoins the first area and has a maximum radius R₂ > R₁, the first area (4) having a first base material for use at a first temperature, and the second area (5) having a second base material for use at a second temperature, which is lower than the first temperature, having a respective steel alloy containing 8.0% by weight to 12.5% by weight of Cr, the respective austenitization temperatures of which are substantially identical.

2. Turbine shaft (1) according to Claim 1, in which each austenitization temperature lies in the range from 950°C to 1150°C, in particular at 1050°C.

3. Turbine shaft (1) according to one of the preceding claims, in which the first base material and the second base material each have a nickel content of from 0.1% by weight to 1.8% by weight, the second base material having a greater nickel content, in particular a nickel content which is greater by more than 0.1%.

4. Turbine shaft (1) according to one of the preceding claims, in which the second base material includes (data in percent by weight) 9.5% to 10.5% of Cr and 1.0% to 1.5% of Ni, in particular 9.8% of Cr and 1.3% of Ni, and the first base material includes (data in percent by weight) 10.0% to 12.0% of Cr and 0.2% to 0.6% of Ni.

5. Turbine shaft (1) according to one of the preceding claims, in which the first base material includes (data in percent by weight):
0% - 3.0% of W, 0% - 3.0% of Co and/or 0% - 2.0% of Re.

6. Turbine shaft (1) according to Claim 5, in which the first base material includes (data in percent by weight):
2.4% - 2.7% of W and/or 2.4% - 2.6% of Co.

7. Turbine shaft (1) according to Claim 5 or 6, in which the first base material includes (data in percent by weight):
Mo 0% to 0.5%, in particular 0.15% - 0.25%,
V 0.1% to 0.3%, in particular 0.15% - 0.25%,
Nb 0.02% to 0.18%, in particular 0.04% - 0.08%,
N 0.01% to 0.07%, in particular 0.015% - 0.045%,
C 0.05% to 0.25%, in particular 0.08% - 0.12% and
deoxidizing elements, such as up to 0.15% of Si, up to 0.7% of Mn, in particular 0.4% - 0.6%, and production-related impurities, in particular including As, Al, P, Sb, Sn, S.

8. Turbine shaft (1) according to one of Claims 5 to 7, in which at least the first base material includes, as further alloying component, up to 0.03% by weight, in particular 0.005% by weight to 0.02% by weight, of boron.

9. Turbine shaft (1) according to one of the preceding claims, in which the second base material includes (data in percent by weight):
1.0% to 1.6% of Mo, in particular 1.4%,
0.15% to 0.25% of V, in particular 0.21%,
0.03% to 0.07% *of* Nb, in particular 0.05%,
0.03% to 0.06% of N, in particular 0.04%,
up to 0.1% of Si,
0.1% to 0.2% of C, in particular 0.16%,
up to 0.2% of Mn.

10. Turbine shaft (1) according to one of the preceding claims, in which the first area (4) has a core area (6) made from the second base material, which core area (6) is surrounded by a cladding area (7) made from the first base material.

11. Turbine shaft (1) according to one of the preceding claims in a steam turbine, in which the first area (4) is used to receive the rotor blades of the high-pressure part and the second area (5) is used to receive the rotor blades of the low-pressure part of the steam turbine.

12. Process for producing a turbine shaft (1) according to one of the preceding claims, in which the first area (4) is produced by melting down an electrode or a plurality of electrodes made from the first base material and the second area (5) is produced by melting down an electrode or a plurality of electrodes made from the second base material, in such a way that they are joined to one another.

13. Process for producing a turbine shaft (1) according to one of Claims 1 to 11 or method according to Claim 12, in which the first area (4) is produced by forming a hollow cylinder (8), which forms a cladding area (7), from the first base material, which hollow cylinder (8) is filled with the second base material or a third base material, so as to form a core area (6), by melting down an electrode or a plurality of electrodes.

14. Method for producing a turbine shaft (1) according to one of Claims 1 to 11 or method according to Claim 12, in which the second area (5) is produced by forming a hollow cylinder (8), which forms a cladding area (7), from the second base material, which hollow cylinder (8) is filled with the first base material, so as to form a core area (6), by melting down an electrode or a plurality of electrodes.

## Revendications

1. Arbre (1) de turbine notamment pour une turbine à vapeur, qui est dirigé le long d'un axe (2) de révolution et qui a une première partie (4) dirigée axialement, ayant un rayon R₁ maximum et une deuxième partie (5) dirigée axialement, qui est adjacente à la première partie et qui a un rayon maximum R₂ > R₁, la première partie (4) étant en un premier matériau de base destiné à être utilisé à une première température, et la deuxième partie (5) en un deuxième matériau de base destiné à être à une deuxième température plus basse que la première température, comprenant un alliage à l'acier respectif contenant de 8,0 % en poids à 12,5 % en poids de Cr, dont les températures d'austénisation respectives sont sensiblement égales.

2. Arbre (1) de turbine suivant la revendication 1, dans lequel chaque température d'austénisation est de l'ordre de 950°C à 1150°C, et notamment est égale à 1050°C.

3. Arbre (1) de turbine suivant l'une des revendications précédentes, dans lequel le premier matériau de base et le deuxième matériau de base ont chacun une proportion de nickel de 0,1 % en poids à 1,8 % en poids, le deuxième matériau de base ayant une proportion de nickel plus grande; notamment plus grande de plus de 0,1 %.

4. Arbre (1) à turbine suivant l'une des revendications précédentes, dans lequel le deuxième matériau de base (les indications sont données en pourcentage en poids) comprend de 9,5 % à 10,5 % de Cr et de 1,0 % à 1,5 % de Ni, notamment 9,8 % de Cr et 1,3 % de Ni, et le premier matériau de base comprend de 10,0 % à 12,0 % de Cr et de 0,2 % à 0,6 % de Ni.

5. Arbre (1) à turbine suivant l'une des revendications précédentes, dans lequel le premier matériau de base comprend (les indications sont données en pourcentage en poids):
de 0 % à 3,0 % de W, de 0 % à 3,0 % de Co et/ou de 0 % à 2,0 % de Re.

6. Arbre (1) à turbine suivant la revendication 5, dans lequel le premier matériau de base a (les indications sont données en pourcentage en poids): de 2,4 % à 2,7 % de W et/ou de 2,4 % à 2,6 % de Co.

7. Arbre (1) à turbine suivant la revendication 5 ou 6, dans lequel le premier matériau a (les indications sont données en pourcentage en poids) :
Mo de 0 % à 0,5 %, notamment de 0,15 % à 0,25 %,
V de 0,1 % à 0,3 %, notamment de 0,15 % à 0,25 %,
Nb de 0,02 % à 0,18 %, notamment de 0,04 % à 0,08 %,
N de 0,01 % à 0,07 %, notamment de 0,015 % à 0,045 %,
C de 0,05 % à 0,25 %, notamment de 0,08 % à 0,12 % et des éléments de désoxydation comme jusqu'à 0,15 % de Si, jusqu'à 0,7 % de Mn, notamment de 0,4 % à 0,6 %, ainsi que des impuretés dués à la fabrication, notamment As, Al, P, Sb, Sn, S.

8. Arbre (1) à turbine suivant l'une des revendications 5 à 7, dans lequel au moins le premier matériau de base, a comme autres constituants d'alliage, jusqu'à 0,03 % en poids, notamment de 0,005 % en poids à 0,02 % en poids de bore.

9. Arbre (1) à turbine suivant l'une des revendications précédentes, dans lequel le deuxième matériau d'alliage (les indications sont données en pourcentage en poids) a:
1,0 à 1,6 % de Mo, notamment 1,4 %,
0,15 % à 0,25 % de V, notamment 0,21 %,
0,03 % à 0,07 % de Nb, notamment 0,05 %,
0,03 % à 0,06 % de N, notamment 0,04 %,
jusqu'à 0,1 % de Si,
0,1 % à 0,2 % de C, notamment 0.16 %,
à 0,2 % de Mn.

10. Arbre (1) à turbine suivant l'une des revendications précédentes, dans lequel la première partie (4) a un coeur (6) en le deuxième matériau de base, ce coeur étant entouré d'une enveloppe (7) en le premier matériau de base.

11. Arbre (1) à turbine suivant l'une des revendications précédentes, dans une turbine à vapeur, dans lequel la première partie (4) sert à recevoir les aubes mobiles de la partie haute pression, et la deuxième partie (5) sert à recevoir les aubes mobiles de la partie basse pression de la turbine à vapeur.

12. Procédé de fabrication d'un arbre (1) de turbine suivant l'une des revendications précédentes, dans lequel on fabrique par fusion d'une électrode ou de plusieurs électrodes, en le premier matériau de base, la première partie (4) et par fusion d'une électrode ou de plusieurs électrodes, en le deuxième matériau de base, la deuxième partie (4) de façon à les lier l'une à l'autre.

13. Procédé de fabrication d'un arbre (1) de turbine suivant l'une des revendications ou procédé suivant la revendication 12, dans lequel on produit la première partie (4) de façon à former, à partir du premier matériau de base, un cylindre (8) creux formant une enveloppe (7), lequel cylindre (8) creux est empli par fusion d'une électrode ou de plusieurs électrodes en le deuxième ou en un troisième matériau de base, en formant un noyau (6).

14. Procédé de fabrication d'un arbre (1) de turbine suivant l'une des revendications 1 à 11 ou procédé suivant la revendication 12, dans lequel la deuxième partie (5) est produite de façon à former en le deuxième matériau de base, un cylindre (8) creux formant une enveloppe (7), lequel cylindre (8) creux est empli par fusion d'une électrode ou de plusieurs électrodes, du premier matériau de base en formant un noyau (6).
